# EUROPÄISCHE PATENTSCHRIFT

(11) **EP 1 208 313 B1**
(45) Veröffentlichungstag und Bekanntmachung des Hinweises auf die Patenterteilung: **30.08.2006**
(21) Anmeldenummer: 00947989.0
(22) Anmeldetag: 15.07.2000
(51) Int. Cl.: F16D 23/02

(54) **SYNCHRONKÖRPER AUS EINEM FORMTEIL AUS BLECH**
SYNCHRONISER BODY CONSISTING OF A SHEET-METAL MOULDED PART
CORPS DE SYNCHRONISEUR FORME D'UNE PIECE MOULEE EN TOLE

(30) Priorität: 03.09.1999 DE 19942056
(43) Veröffentlichungstag der Anmeldung: 29.05.2002
(73) Patentinhaber: Schaeffler KG, 91074 Herzogenaurach (DE)
(72) Erfinder: BUER, Gerald, D-96172 Mühlhausen (DE); SCHWUGER, Josef, D-91315 Höchstadt (DE); REINKE, Kristina, D-92237 Sulzbach-Rosenberg (DE)
(86) Internationale Anmeldenummer: PCT/EP2000/006762
(87) Internationale Veröffentlichungsnummer: WO 2001/018418

(56) Entgegenhaltungen:
- DE-A- 2 537 495
- US-A- 4 131 032
- US-A- 4 901 835

## Beschreibung

### Gebiet der Erfindung

Die Erfindung betrifft einen Synchronkörper mit einer Nabe, einer Führung und einem die Nabe mit der Führung verbindenden Steg gemäß dem Oberbegriff von Anspruch 1.

### Hintergrund der Erfindung

In modernen handgeschalteten Getrieben werden überwiegend Synchronisiereinrichtungen eingesetzt, um ein komfortables Rückschalten zwischen den einzelnen Gangstufen eines Wechselschaltgetriebes zu ermöglichen. Beim Schaltvorgang wird mittels verschiedener Elemente der Synchroniereinrichtung die Umfangsgeschwindigkeit eines Gangrades der Umfangsgeschwindigkeit der Getriebewelle angepasst und dann eine formschlüssige Verbindung zwischen der Getriebewelle und diesem Gangrad durch eine Schiebemuffe hergestellt. Ein wichtiges Element der Synchronisiereinrichtung ist der Synchronkörper. Synchronkörper verbinden eine Getriebewelle und eine Schiebemuffe einer Synchronisiereinrichtung drehfest miteinander. Die jahrzehntelange Entwicklung von Wechselgetrieben hat die verschiedensten Ausführungsformen von Synchronisiereinrichtungen und somit auch von Synchronkörpern hervorgebracht. Der Grundaufbau eines Synchronkörpers ist jedoch im wesentlichen gleich geblieben. Ein Synchronkörper ist in der Regel durch eine Nabe und eine Führung für die Schiebemuffe sowie einen Steg, der die Nabe und die Schiebemuffe miteinander verbindet, gebildet. Dabei ist die Quermittelebene des Steges zumeist auf oder im Bereich der Quermittelebene des Synchronkörpers angeordnet. Der Synchronkörper ist in der Regel formschlüssig über ein an dem Innenumfang der Nabe ausgebildetes Keil- bzw. Verzahnungsprofil mit der Getriebewelle verbunden und nimmt über eine Außenverzahnung die Schiebemuffe in Längsrichtung verschiebbar, aber in Umfangsrichtung verdrehfest auf. Dabei bildet die Außenverzahnung selbst die Führung oder die Außenverzahnung ist an der Führung ausgebildet bzw. mit der Führung verbunden. Je nach Ausführung der Synchronisiereinheit sind am oder im Synchronkörper Gleitsteine oder Druckstücke aufgenommen und Anschläge für Synchronringe bzw. benachbarte Bauteile vorgesehen.

Die Ausführung der Stege des Synchronkörpers ist den unterschiedlichen Anwendungen des Synchronkörpers angepasst. So gibt es relativ dünnwandige und scheibenförmig ausgebildete Stege als auch in axialer Richtung die gesamte Breite des Synchronkörpers beanspruchende großvolumig ausgeführte Stege. Besonders in den großvolumig ausgeführten Stegen sind Ausnehmungen für die anfangs erwähnten Druckstücke oder Gleitsteine und die auf die Druckstücke oder Gleitsteine wirkenden Federn eingebracht. Die Breite der Stege ist oftmals auch durch die für die Funktion notwendigen axialen Abstände der Anschläge oder Anschlagflächen am Synchronkörper zu anderen Elementen der Synchronisiereinrichtung bestimmt.

Die Mehrzahl der verschiedenen Varianten von Synchronkörpern wird zum derzeitigen Stand noch in spanabhebenden Verfahren aus einem Rohling gefertigt, obwohl schon seit längerem auch die Möglichkeit der Fertigung von Synchronkörper durch Umformen von Blech bekannt ist.

Für die spanlose Fertigung von Synchronkörpern wird als Ausgangsmaterial Blech- oder Bandmaterial verwendet, das durch Trennen und Umformen in seine bestimmungsgemäße Form gebracht wird. Die spanende Bearbeitung bei der Fertigung derartiger Synchronkörper beschränkt sich dabei auf die Nachbearbeitung oder entfällt ganz. Die Hauptvorteile derartig gefertigter Synchronkörper liegen in den relativ geringen Kosten für ihre Herstellung in der Massenproduktion sowie in ihrem geringen Gewicht. Weiterhin wird der Großteil des zur Fertigung eingesetzten Ausgangsmateriales auch tatsächlich zur Bildung der geometrischen Form des Synchronkörpers verwendet und geht somit nicht, wie bei der spanabhebenden Fertigung, als Abfallmaterial verloren. Ein durch Umformen gefertigter Synchronkörper wurde schon am 25.03.1976 mit DE 25 37 495 offengelegt. Dieser Synchronkörper ist aus zwei an ihrem Stirnseiten miteinander verbundenen Abschnitten gebildet. Die Verbindungsebene bildet die Quermittelebene des Synchronkörpers. Jeder Abschnitt ist in einem Umformverfahren aus Blech geformt und bildet jeweils eine Hälfte der Führung, des Steges sowie der Nabe. In der Führung und zum Teil auch im Steg sind Längsnuten *oder radial nach außen geöffnete Aufnahmen für die Aufnahme von Druckstücken oder Sperretementen* eingebracht. *In dem Synchronkörper ist eine Feder eingehakt. Diese Feder spannt die in den Aufnahmen aufgenommenen Druckstücke oder Sperrelemente radial nach außen gegen die auf dem Synchronkörper sitzende Schiebemuffe vor. Eine derartig angeordnete Feder kann während der Montage der Einzelteile der Synchronisierung leicht ihre bestimmungsgerechte Position verlieren da sie nicht gesichert ist.*

Die Mehrzahl der verschiedenen Varianten an Synchronkörpem wird deshalb derzeitig noch in spanabhebenden Verfahren aus einem Rohling gefertigt, obwohl schon seit längerem die Möglichkeit der Fertigung von Synchronkörpem durch die Umformung von Blech bekannt ist, weil der Anwendung der durch Umformung von Blech gefertigten Synchronkörper Grenzen gesetzt sind. Die Gründe für deren sehr eingeschränkte Anwendung vor dem Zeitpunkt, an dem die nachfolgend beschriebene Erfindung gemacht wurde, liegen darin, dass ihre Gestalt in Abhängigkeit von der Entformungsrichtung beim Formen ihrer Blechteile nur relativ einfach ausgeführt werden kann. Komplizierte Strukturen, wie sie die oben beschriebenen Aufnahmen und Anschläge *und Federn* erfordem, sind nur schwer oder gar nicht zu realisieren. Aufgrund der Dünnwandigkeit der Formteile lässt sich auch selten die nofinrendige Breite der Stege auf die für die Funktion notwendigen axialen Abstände der Anschläge oder Anschlagflächen am Synchronkörper zu anderen Elementen der Synchronisiereinrichtung erzielen. Ein weiteres Merkmal, das bisher gegen den Einsatz von derartigen Synchronkörpem stand, ist der Verlust an Pass- und Funktionsgenauigkeit des Teiles durch Zusammensetzen aus einzelnen Formteilen. Dies gilt insbesondere für die die Genauigkeit der Verzahnung nachteilig beeinflussende Verbindungsstelle an der Nabe oder der Führung. Zusätzlich leidet auch die Tragfähigkeit der Verzahnung an den Verbindungsstellen der Formteile.

*In US 4,131,032 ist ein aus Blech gestaltetes Antriebsrad beschrieben. Das Zahnrad ist mit einer Nabe, einer Führung und einem die Nabe mit der Führung zu einem einteiligen Formteil aus Blech verbindenden Steg gebildet. In dem Formteil ist durch die Führung radial außenseitig, die Nabe radial innenseitig und den Steg axial in eine Längsrichtung sowie durch einen in das Formteil eingesetzten Anschlag in die andere Längsrichtung ein ringförmig .ausgebildeter Hohlraum begrenzt.*

### Zusammenfassung der Erfindung

Das der nachfolgend beschriebenen Erfindung zu Grunde liegende technische Problem liegt also darin, dass vor dem Zeitpunkt, an dem die Erfindung gemacht wurde, aus Blech geformte Synchronkörper aufgrund fehlender und durch die Umformung von Blech nicht bzw. schwer zu realisierender Merkmale den Anforderungen an Synchronkörper in modernen Wechselgetrieben nicht gewachsen waren, *das betrifft insbesondere die Anordnung von einzelnen Elementen am Synchronkörper, die während der Montage im Getriebe oder auf dem Transportweg verloren gehen können.*

Dieses Problem ist erfindungsgemäß mit einem Synchronkörper nach Anspruch 1 dadurch gelöst, *dass in dem durch die Führung, den Steg, die Nabe und den ersten Anschlag zumindest teilweise begrenzten Hohlraum mindestens eine Feder aufgenommen ist.*

An einem einteilig geformten Synchronkörper verläuft die Verzahnung bzw. das Keilprofil der Führung sowie der Nabe durchgängig und ist nicht an einer Verbindungsebene geschwächt. Der Steg kann mit seiner Quermittelebene auf der Quermittelebene des Synchronkörpers liegen, ist aber vorzugsweise an einem der axialen Enden des Synchronkörpers ausgebildet Die Wandung des Steges ist umlaufend geschlossen oder mit Löchern und Anschlägen versehen. An dem Formteil ist mindestens ein Anschlag befestigt. Eine gelochte Scheibe ist zusätzlich beliebig mit Prägungen, Kröpfungen und Vorsprüngen ausgestaltbar. Der oder die Anschläge sind separat als Einzelteile in allen denkbaren Formen gefertigt und am Umfang der Nabe, des Steges oder der Führung befestigt. Vorzugsweise ist ein Anschlag in der Ausführung einer gelochten Scheibe vorzusehen, der mit seinem Loch über die Außenfläche der Nabe geschoben und an der Nabe und/oder der Führung befestigt ist. Der oder die Anschläge wirken je nach Ausführung des Synchronkörpers in axiale und/oder Umfangsrichtung. Es ist denkbar, das Formteil und die Anschläge aus dem gleichen Material, mit gleicher Oberflächen- und Wärmebehandlung oder sich in diesen Merkmalen unterscheidend auszuführen.

Die Stegbreite kann mittels eines Anschlages, insbesondere eines als gelochte Scheibe ausgeführten Anschlages, verbreitert werden. Die Stegdicke ist dabei mittels der Dicke des gewählten Bleches für die Fertigung des Anschlages von Synchronkörper zu Synchronkörper variabel gestaltbar. Zusätzlich ist die Breite des Synchronkörpers im Bereich des Steges durch den Abstand des Anschlages zum Steg beeinflussbar. Der Anschlag kann unmittelbar an dem Steg benachbart angeordnet sein oder ist, wie die Erfindung vorsieht, zu dem Steg beabstandet angeordnet, wobei an dem Formteil die Führung radial außenseitig, die Nabe radial innenseitig und der Steg axial in die eine Längsrichtu,ng einen weitestgehend ringförmig ausgebildeten Hohlraum begrenzen. Der Anschlag begrenzt den Hohlraum zumindest teilweise axial in die andere Längsrichtung. Zusätzlich zu der pkünstlichen° Verbreiterung des Steges ist ein derartiger Hohlraum dazu geeignet, das Gewicht eines Synchronkörpers so gering wie möglich zu halten und weitere Elemente der Synchronisiereinrichtung aufzunehmen.

Eine weitere Ausgestaltung der Erfindung sieht vor, den Anschlag durch eirie ringförmig ausgebildete Scheibe zu bilden und die Scheiben mittels wenigstens einer Schweißung oder zumindest einer form-kraftschlüssigen Verbindung auf dem vom Steg weggerichteten freien Ende der Nabe zu befestigen. Die Scheibe ist somit mit geringen Kosten an dem Formteil befestigt. Unter form-kraftschlüssigen Verbindungen sind z. B. das Aufstecken mit anschließendem Verstemmen oder Sichern durch eine an dem Umfang der Nabe eingebrachte Rollierung zu verstehen.

Unter Sperrelementen und Druckstücken sind die Elemente oder deren Kombinationen von Elementen der Synchronisiereinrichtungen zu verstehen, die als Arretierelemente oder Wirkelemente in Wechselbeziehung mit dem Synchronkörper auf die Schiebemuffe und/oder die Synchronringe wirken. Die Feder oder Federn sind in dem Hohlraum gehalten, geführt oder verliergesichert. Die Aufnahmen oder Nuten sind vorzugsweise während des Umformungsprozesses durch seitliches Ausstanzen und/oder Fräsen eingebracht. Schließlich sieht eine weitere Ausgestaltung vor, dass an zumindest einer die Aufnahme axial in wenigstens eine der Längsrichtung begrenzenden Seite der Aufnahme ein zweiter Anschlag ausgebildet ist. Ein derartiger Anschlag ist zum Beispiel für die Begrenzung des axialen Verschiebeweges einer Schiebemuffe bzw. des Druckstückes zweckdienlich.

### Kurze Beschreibung der Zeichnung

Die Erfindung wird nachfolgend anhand von drei Ausführungsbeispielen erläutert. Es zeigen:
- Figur 1: ein Ausführungsbeispiel eines bekannten Synchronkörpers im Schnitt,
- Figur 2: ein Ausführungsbeispiel eines bekannten Synchronkörpers im Schnitt, bei dem die Nabe, der Steg und der erste Anschlag einen Hohlraum begrenzen,
- Figur 3: ein Ausführungsbeispiel eines erfindungsgemäßen Synchronkörpers mit Aufnahmen für ein Druckstück und einer in einem Hohlraum aufgenommenen Feder.

### Ausführliche Beschreibung der Zeichnung

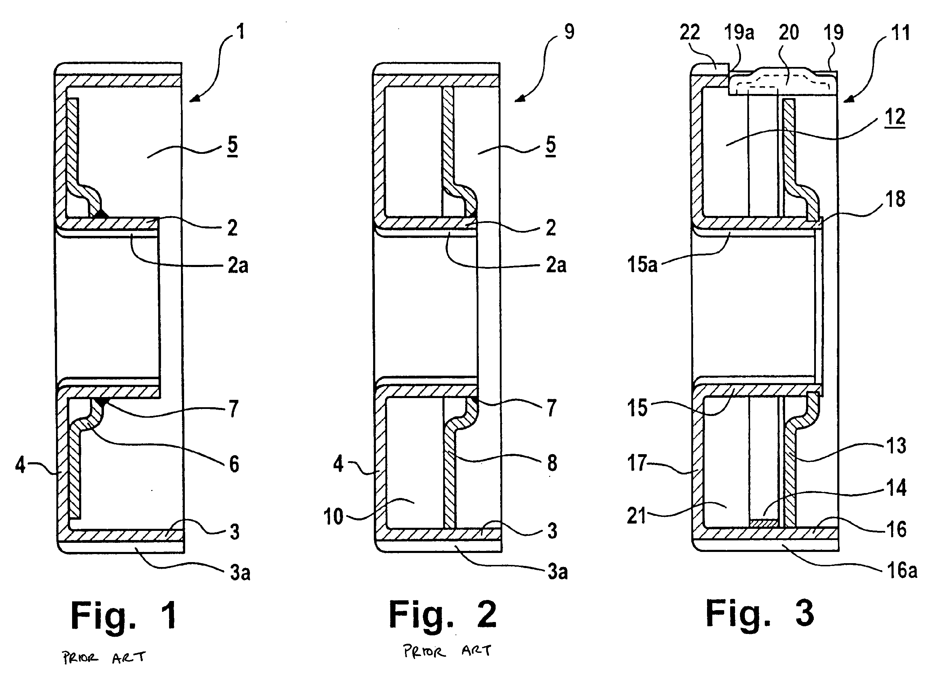

Figur 1 zeigt einen bekannten Synchronkörper 1, der aus einer Nabe 2, einer Führung 3 und einem die Nabe 2 mit der Führung 3 verbindenden Steg 4 gebildet ist. Die Nabe 2, die Führung 3 und der Steg 4 bilden einstückig ein Formteil 5 aus Blech. Am Innenumfang der Nabe 2 ist eine Innenverzahnung 2a ausgeformt. Die Innenverzahnung 2a ist für den Eingriff in eine nicht dargestellte Gegenverzahnung einer Getriebewelle vorgesehen. Die Führung 3 ist mit einer Außenverzahnung 3a für die längsverschiebbare Aufnahme einer nichtdargestellten Schiebemuffe versehen. Der Steg 4 ist an einer der Stirnseiten des Synchronkörpers 1 angeordnet. An dem Formteil 5 ist ein erster Anschlag 6 befestigt. Der erste Anschlag 6 ist als eine gelochte und gekröpfte Scheibe ausgeführt. Der erste Anschlag 6 ist mittels einer Schweißung 7 auf der Nabe 2 fixiert und liegt dabei an dem Steg 4 an.

Figur 2 zeigt einen bekanten Synchronkörper 9, welcher das gleiche Formteil 5 des Synchronkörpers 1 aufweist. Im Gegensatz zur Anordnung des ersten Anschlages 6 direkt an dem Steg 4 des Synchronkörpers 1 sitzt ein erster Anschlag 8 des Synchronkörpers 9 an dem freien axialen Ende der Nabe 2. Der erste Anschlag 8 ist an der Nabe 2 wiederum durch eine Schweißung 7 befestigt. An dem Formteil 5 des Synchronkörpers 9 begrenzen die Führung 3 radial außenseitig, die Nabe 2 radial innenseitig, der Steg 4 axial in die eine Längsrichtung sowie der erste Anschlag 8 zumindest teilweise axial in die andere Längsrichtung einen ringförmig ausgebildeten Hohlraum 10. Mittels der Anordnung des Anschlages 8 an dem freien Ende der Nabe 2 ist die Breite des Synchronkörpers 9 im Stegbereich im Vergleich zur Breite des Synchronkörpers 1 im Stegbereich verbreitert.

Figur 3 zeigt einen erfindungsgemäßen Synchronkörper 11, der aus einem Formteil 12, einem ersten Anschlag 13 und einer Feder 14 gebildet ist. Das Formteil 12 ist wiederum einstückig aus einer mit einer Innenverzahnung 15a versehenen Nabe 15, eine mit einer Außenverzahnung 16a versehenen Führung 16 sowie einem Steg 17 gebildet. Der Steg 17 ist wiederum an der einen Stirnseite des Synchronkörpers 11 angeordnet, während der erste Anschlag 13 an dem in axiale Richtung weisenden freien Ende der Nabe 15 mit einer form-kraftschlüssigen Verbindung 18 befestigt ist. Die form-kraftschlüssige Verbindung 18 ist als eine Steckverbindung in Kombination mit einer zumindest teilweisen Rollierung des Endes der Nabe 15 ausgeführt. Das Formteil 12 weist am Umfang verteilt Aufnahmen 19 auf. In jeder Aufnahme 19 ist ein Druckstück 20 angeordnet. Die Druckstücke 20 werden mittels der Feder 14 gegen eine nichtdargestellte Schiebemuffe vorgespannt. Die Feder 14 ist in einem Hohlraum 21 aufgenommen. Der Hohlraum 21 ist radial außenseitig durch die Führung 16, radial innenseitig durch die Nabe 15, in die eine Längsrichtung durch den Steg 17 sowie in die andere Längsrichtung zumindest teilweise durch den ersten Anschlag 13 begrenzt. An einer die Aufnahme 19 in axiale Richtung begrenzenden Seite 19a ist ein zweiter Anschlag 22 für ein Begrenzen des axialen Verschiebewegs der nichtdargestellten Schiebemuffe ausgebildet.

### Bezugszeichen

- 1: Synchronkörper
- 2: Nabe
- 2a: Innenverzahnung
- 3: Führung
- 3a: Außenverzahnung
- 4: Steg
- 5: Formteil
- 6: erster Anschlag
- 7: Schweißung
- 8: erster Anschlag
- 9: Synchronkörper
- 10: Hohlraum
- 11: Synchronkörper
- 12: Formteil
- 13: erster Anschlag
- 14: Feder
- 15: Nabe
- 15a: Innenverzahnung
- 16: Führung
- 16a: Außenverzahnung
- 17: Steg
- 18: form-kraftschlüssige Verbindung
- 19: Aufnahme
- 19a: begrenzende Seite
- 20: Druckstück
- 21: Hohlraum
- 22: zweiter Anschlag

## Patentansprüche

1. Synchronkörper (1, 9, 11) mit einer Nabe (2, 15), einer Führung (3, 16) und einem die Nabe (2, 15) mit der Führung (3, 16) zu einem einteiligen Formteil (5, 12) aus Blech verbindenden Steg (4, 17), wobei an dem Formteil (5, 12) die Führung (3, 16) radial außenseitig, die Nabe (2, 15) radial innenseitig, der Steg (4, 17) axial in die eine Längsrichtung und mindestens ein erster am Umfang der Nabe (2, 15) sitzender erster Anschlag (6, 8, 13) zumindest teilweise in die andere Längsrichtung des Synchronkörpers (1, 9, 11) einen ringförmig ausgebildeten Hohlraum (10, 21) begrenzen und wobei das Formteil (12) wenigstens eine radial nach außen geöffnete Aufnahme (19) oder Nut für das Aufnehmen von Sperrelementen oder Druckstücken (20) aufweist, **dadurch gekennzeichnet, dass** in dem Hohlraum (21) mindestens eine Feder (14) aufgenommen ist.

2. Synchronkörper nach Anspruch 1, **dadurch gekennzeichnet, dass** der erste Anschlag (6, 8, 13) durch eine ängfönnig ausgebildete Scheibe gebildet ist.

3. Synchronkörper nach Anspruch 2, **dadurch gekennzeichnet, dass** der erste Anschlag (6, 8) mittels wenigstens einer Schweißung .(7) auf dem vom Steg (4) weggerichteten freien Ende der Nabe (2) befestigt ist.

4. Synchronkörper nach Anspruch 2, **dadurch gekennzeichnet, dass** der erste Anschlag (13) mittels zumindest einer form-kraftschlüssigen Verbindung (18) auf dem vom Steg (17) weggerichteten freien Ende der Nabe (15) befestigt ist.

5. Synchronkörper nach Anspruch 4, wobei an zumindest einer die Aufnahme (19) axial in wenigstens eine der Längsrichtung begrenzenden Seiten (19a) ein zweiter Anschlag (22) ausgebildet ist.

## Claims

1. Synchroniser body (1, 9, 11) comprising a hub (2, 15), a guide (3, 16) and a web (4, 17) that connects the hub (2, 15) to the guide (3, 16) to form a one-piece shaped part (5, 12) of sheet metal, wherein a hollow annular space (10, 21) is defined on the shaped part (5, 12), radially outside by the guide (3, 16), radially inside by the hub (2, 15), axially in the one longitudinal direction by the web (4, 17), and at least partially in the other longitudinal direction of the synchroniser body (1, 9, 11) by at least one first stop (6, 8, 13) that is seated on the periphery of the hub (2, 15), and wherein the shaped part (12) comprises at least one reception (19) or groove that is open in radially outward direction for receiving locking elements or thrust members (20), **characterised in that** at least one spring (14) is received in the hollow space (21).

2. Synchroniser body according to daim 1, **characterised in that** the first stop (6, 8, 13) is formed by an annular disk.

3. Synchroniser body according to daim 2, **characterised in that** the first stop (6, 8) is fixed by at least one weld joint (7) on the free end of the hub (2) oriented away from the web (4).

4. Synchroniser body according to daim 2, **characterised in that** the first stop (13) is fixed by at least one positive force-locked connection (18) on the free end of the hub (15) oriented away from the web (17).

5. Synchroniser body according to daim 4, wherein a second stop (22) is formed on at least one side (19a) that limits the reception (19) axially in at least one longitudinal direction.

## Revendications

1. Corps de synchronisation (1, 9, 11) comprenant un moyeu (2, 15), un guide (3, 16) et une entretoise (4, 17) qui relie le moyeu (2, 15) au guide (3, 16) pour former, d'un seul tenant, une pièce formée (5, 12) en tôle, un espace annulaire vide (10, 21) étant défini sur la pièce formée (5, 12), du côté radialement extérieur par le guide (3, 16), du côté radialement intérieur par le moyeu (2, 15), axialement en l'une des directions longitudinales par l'entretoise (4, 17), et au moins partiellement dans l'autre direction longitudinale du corps de synchronisation (1, 9, 11) par au moins un premier arrêt (6, 8, 13) qui est disposé sur la périphérie du moyeu (2, 15), et ladite pièce formée (12) comprenant au moins une réception (19) ou rainure qui est ouverte vers l'extérieur pour recevoir des éléments d'arrêt ou des membres de la poussée (20), **caractérisé en ce que**, au moins un ressort (14) est reçu dans l'espace vide (21).

2. Corps de synchronisation selon la revendication 1, **caractérisé en ce que** le premier arrêt (6, 8, 13) est formé par un disque annulaire.

3. Corps de synchronisation selon la revendication 2, **caractérisé en ce que** le premier arrêt (6, 8) est fixé par au moins une soudure (7) sur l'extrémité libre du moyeu (2) orientée à l'opposé de l'entretoise (4).

4. Corps de synchronisation selon la revendication 2, **caractérisé en ce que** le premier arrêt (13) est fixé par au moins une liaison positive à force (18) sur l'extrémité libre du moyeu (15) orientée à l'opposé de l'entretoise (17).

5. Corps de synchronisation selon la revendication 4, dans lequel un second arrêt (22) est formé sur au moins un côte (19a) qui délimite la réception (19) axialement daris au moins une direction longitudinale.
